# EUROPEAN PATENT APPLICATION

(11) **EP 4 521 691 A1**
(43) Date of publication of application: **12.03.2025**
(21) Application number: 23819998.8
(22) Date of filing: 09.05.2023
(51) Int. Cl.: H04L 27/26, H04L 5/00, H04W 72/04, H04W 74/00, H04W 92/12

(54) **ELECTRONIC DEVICE AND METHOD FOR PROVIDING FRAME STRUCTURE IN FRONTHAUL INTERFACE**

(30) Priority: 09.06.2022 KR 20220069955
(71) Applicant: Samsung Electronics Co., Ltd., Suwon-si, Gyeonggi-do 16677 (KR)
(72) Inventor: SHIM, Seijoon, Suwon-si Gyeonggi-do 16677 (KR); LIM, Hyoungjin, Suwon-si Gyeonggi-do 16677 (KR); HUH, Sunguk, Suwon-si Gyeonggi-do 16677 (KR)
(74) Representative: HGF
(86) International application number: PCT/KR2023/006308
(87) International publication number: WO 2023/239062

(57) **Abstract**

According to embodiments, a method performed by a radio unit (RU) may comprise a step of receiving a control plane (C-plane) message including frame structure information from a distributed unit (DU) through a fronthaul interface. The frame structure information may comprise information for indicating the size of a fast Fourier transform (FFT) or an inverse FFT (iFFT) and numerology information. The method may include a step of identifying a subcarrier spacing (SCS) on the basis of the numerology information. When the numerology information is a designated value, the SCS may be 480 kilohertz (kHz). When the numerology information is a different designated value, the SCS may be 960 kHz.

## Description

### [Technical Field]

The present disclosure relates to a fronthaul interface. More specifically, the present disclosure relates to an electronic device and a method for providing a frame structure in the fronthaul interface.

### [Background Art]

As a transmission capacity increases in a wireless communication system, a function split that functionally slit a base station is being applied. In accordance with the function split, the base station may be split into a distributed unit (DU) and a radio unit (RU). A fronthaul interface is defined for communication between the DU and the RU.

The above-described information may be provided as a related art for the purpose of helping understanding of the present disclosure. No argument or decision is made as to whether any of the above description may be applied as a prior art related to the present disclosure.

### [Disclosure]

### [Technical Solution]

According to embodiments, a method performed by a radio unit (RU) may comprise receiving, from a distributed unit (DU) through a fronthaul interface, a control plane (C-plane) message including frame structure information. The frame structure information may include information indicating a size of fast fourier transform (FFT) or inverse FFT (iFFT), and numerology information. The method may comprise identifying a subcarrier spacing (SCS) based on the numerology information. In case that the numerology information may be a designated value, the SCS is 480 kilohertz (kHz). In case that the numerology information may be another designated value, the SCS is 960 kHz.

According to embodiments, a method performed by a distributed unit (DU) may comprise generating frame structure information including information indicating a size of fast fourier transform (FFT) or inverse FFT (iFFT), and numerology information indicating a subcarrier spacing (SCS). The method may comprise transmitting, to a radio unit (RU) through a fronthaul interface, a control plane (C-plane) message including the frame structure information. In case that the numerology information is a designated value, the SCS may be 480 kilohertz (kHz). In case that the numerology information is another designated value, the SCS may be 960 kHz.

According to embodiments, an electronic device of a radio unit (RU) may comprise at least one transceiver and at least one processor coupled to the at least one transceiver. The at least one processor may be configured to control the at least one transceiver to receive, from a distributed unit (DU) through a fronthaul interface, a control plane (C-plane) message including frame structure information. The frame structure information may include information indicating a size of fast fourier transform (FFT) or inverse FFT (iFFT) and numerology information. The at least one processor may be configured to identify a subcarrier spacing (SCS) based on the numerology information. In case that the numerology information may be a designated value, the SCS is 480 kilohertz (kHz). In case that the numerology information may be another designated value, the SCS is 960 kHz.

According to embodiments, an electronic device of a distributed unit (DU) may comprise at least one transceiver, and at least one processor coupled to the at least one transceiver. The at least one processor may be configured to generate frame structure information including information indicating a size of fast fourier transform (FFT) or inverse FFT (iFFT) and numerology information indicating a subcarrier spacing (SCS). The at least one processor may be configured to control the at least one transceiver to transmit, to a radio unit (RU) through a fronthaul interface, a control plane (C-plane) message including the frame structure information. In case that the numerology information may be a designated value, the SCS is 480 kilohertz (kHz). In case that the numerology information may be another designated value, the SCS is 960 kHz.

### [Description of the Drawings]

FIG. 1 illustrates a wireless communication system according to embodiments.
FIG. 2A illustrates a fronthaul interface according to embodiments.
FIG. 2B illustrates a fronthaul interface of an open (O)-radio access network (RAN) according to embodiments.
FIG. 3A illustrates a functional configuration of a distributed unit (DU) according to embodiments.
FIG. 3B illustrates a functional configuration of a radio unit (RU) according to embodiments.
FIG. 4 illustrates an example of a function split between a DU and an RU according to embodiments.
FIG. 5A illustrates an example of a control plane (C-plane) message according to embodiments.
FIG. 5B illustrates an example of section extension information according to embodiments.
FIG. 6 illustrates an example of signaling between a DU and an RU to support a subcarrier spacing (SCS) through a management plane (M-plane) message and a C-plane message according to embodiments.
FIG. 7 illustrates an operation flow of an RU for supporting a SCS through an M-plane message and a C-plane message according to embodiments.
FIG. 8 illustrates an example of signaling between a DU and an RU for supporting a SCS through a C-plane message according to embodiments.
FIG. 9 illustrates an operation flow of an RU for supporting a SCS through a C-plane message according to embodiments.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

Terms referring to merging (e.g., merging, grouping, combination, aggregation, joint, integration, and unifying), terms referring to a signal (e.g., packet, message, signal, information, and signaling), terms referring to a resource (e.g., section, symbol, slot, subframe, radio frame, subcarrier, resource element (RE), resource block (RB), bandwidth part (BWP) and occasion), terms for an calculation state (e.g., step, operation, and procedure), terms referring to data (e.g., packet, message, user stream, information, bit, symbol, and codeword), terms referring to a channel, terms referring to network entities (distributed unit (DU), radio unit (RU), central unit (CU), CU-control plane (CP), CU-user plane (UP), open radio access network (O-RAN) DU (O-DU), O-RAN RU (O-RU), O-RAN CU (O-CU), O-RAN CU-CP (O-CU-UP), O-RAN CU-CP (O-CU-CP)), terms referring to a component of a device, and the like, used in the following description are exemplified for convenience of explanation. Therefore, the present disclosure is not limited to terms to be described below, and another term having an equivalent technical meaning may be used. In addition, a term such as '...unit, '...device, '...module, and '...member', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' means at least one of elements from A (including A) to B (including B). Hereinafter, 'C' and/or 'D' means that at least one of 'C' or 'D', that is, {'C', 'D', 'C' and 'D'}.

The present disclosure describes various embodiments using terms used in a partial communication standard (e.g., 3rd Generation Partnership Project (3GPP), extensible radio access network (xRAN), and open-radio access network (O-RAN)), but this is only an example for explanation. Various embodiments of the present disclosure may be easily modified and applied in another communication system.

The present disclosure provides an electronic device and a method for providing a subcarrier spacing (SCS) of a frame structure on a fronthaul interface.

In addition, the present disclosure provides a device and a method for providing a SCS for a high-frequency band on a fronthaul interface.

In addition, the present disclosure provides a device and a method for providing a SCS for a high-frequency band through a management plane message and a control plane message on a fronthaul interface.

In addition, the present disclosure provides a device and a method for providing a SCS for a high-frequency band through a control plane message on a fronthaul interface.

An electronic device and a method according to embodiments of the present disclosure enable wireless communication in a high-frequency band by providing an additional subcarrier spacing (SCS) on a fronthaul interface.

The effects that may be obtained from the present disclosure are not limited to those described above, and any other effects not mentioned herein will be clearly understood by those having ordinary knowledge in the art to which the present disclosure belongs, from the following description.

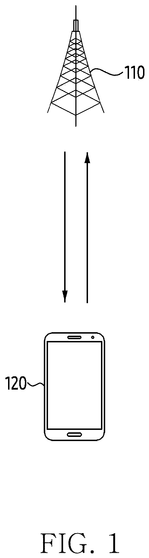

FIG. 1 illustrates a wireless communication system according to embodiments.

Referring to FIG. 1, FIG. 1 exemplifies a base station 110 and a terminal 120 as a portion of nodes using a wireless channel in the wireless communication system. Although FIG. 1 illustrates only one base station, the wireless communication system may further include another base station identical or similar to the base station 110.

The base station 110 is a network infrastructure for providing wireless access to the terminal 120. The base station 110 has coverage defined based on a distance at which a signal may be transmitted. In addition to the base station, the base station 110 may be referred to as an 'access point (AP)', an 'eNode B (eNB)', a '5th generation node', a 'next generation node B (gNB)', a 'wireless point', a 'transmission/reception point (TRP)', or another term having a technical meaning equivalent thereto.

The terminal 120, which is a device used by a user, may perform communication with the base station 110 through the wireless channel. A link from the base station 110 to the terminal 120 is referred to as a downlink (DL), and a link from the terminal 120 to the base station 110 is referred to as an uplink (UL). In addition, although not illustrated in FIG. 1, the terminal 120 and another terminal may perform communication with each other through the wireless channel. At this time, a link (device-to-device link (D2D)) between the terminal 120 and the other terminal is referred to as a sidelink, and the sidelink may be used interchangeably with a PC5 interface. In partial other embodiments, the terminal 120 may be operated without involvement of a user. According to an embodiment, the terminal 120, which is a device that performs machine type communication (MTC), may not be carried by a user. In addition, according to an embodiment, the terminal 120 may be a narrowband (NB)- internet of things (IoT) device.

In addition to a terminal, the terminal 120 may be referred to as a 'user equipment (UE)', a 'customer premises equipment (CPE)', a 'mobile station', a 'subscriber station', a 'remote terminal', a 'wireless terminal', an 'electronic device', or 'user device' or another term having a technical meaning equivalent thereto.

The base station 110 may perform beamforming with the terminal 120. The base station 110 and the terminal 120 may transmit and receive a wireless signal in a relatively low frequency band (e.g., a frequency range 1 (FR 1) of NR). In addition, The base station 110 and the terminal 120 may transmit and receive wireless signals in a relatively high frequency band (e.g., a FR 2 (or referred to as a FR 2-1) of NR), a millimeter wave (mmWave) band (e.g., 28 GHz, 30 GHz, 38 GHz, or 60 GHz)). In order to improve a channel gain, the terminal 120 and the base station 110 may perform the beamforming. Herein, the beamforming may include transmission beamforming and reception beamforming. The base station 110 and the terminal 120 may assign directivity to a transmission signal or a reception signal. To this end, the base station 110 and the terminal 120 may select serving beams through a beam search or a beam management procedure. After the serving beams are selected, subsequent communication may be performed through a resource that is in a Quasi Co-Location (QCL) relationship with a resource that transmitted the serving beams.

If large-scale characteristics of a channel that transferred a symbol on a first antenna port may be inferred from a channel that transferred a symbol on a second antenna port, the first antenna port and the second antenna port may be evaluated to be in the QCL relationship. For example, the large-scale characteristics may include at least one of a delay spread, a doppler spread, a doppler shift, an average gain, an average delay, and a spatial receiver parameter.

In FIG. 1, it is described that both the base station 110 and the terminal 120 perform the beamforming, but embodiments of the present disclosure are not necessarily limited thereto. In some embodiments, the terminal may or may not perform the beamforming. In addition, the base station may or may not perform the beamforming. That is, only one of the base station and the terminal may perform the beamforming, or both the base station and the terminal may not perform the beamforming.

In the present disclosure, a beam, which means a spatial flow of a signal in a wireless channel, may be formed by one or more antennas (or antenna elements), and this formation process may be referred to as the beamforming. The beamforming may include at least one of analog beamforming or digital beamforming (e.g., Precoding). A reference signal transmitted based on the beamforming may include, for example, a demodulation-reference signal (DM-RS), a channel state information-reference signal (CSI-RS), a synchronization signal/physical broadcast channel (SS/PBCH), and a sounding reference signal (SRS). In addition, as a configuration for each reference signal, an IE such as a CSI-RS resource or an SRS-resource may be used, and this configuration may include information associated with the beam. The information associated with the beam may mean whether a corresponding configuration (e.g., CSI-RS resource) uses the same spatial domain filter as another configuration (e.g., another CSI-RS resource in the same CSI-RS resource set), or a different spatial domain filter, or which reference signal is quasi-co-located (QCL) with, and if it is QCL, which type (e.g., QCL type A, B, C, and D).

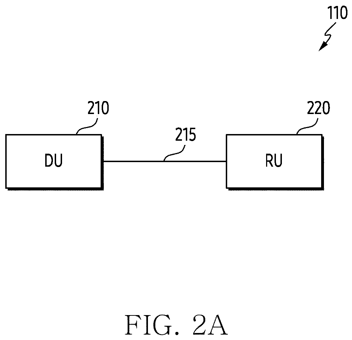

In the related art, in a communication system with a cell radius of a base station being relatively large, each base station is installed such that each base station includes a function of a digital processing unit (or a distributed unit (DU)) and a radio frequency (RF) processing unit (or radio unit (RU)). However, as a higher frequency band is used in 4th generation (4G) and/or a subsequent communication system (e.g., 5G) and cell coverage of a base station decreases, the number of base stations to cover a specific area increases. A burden of an installation cost for an operator to install base stations has also increased. In order to minimize the installation cost of the base station, a structure is proposed in which a DU and an RU of the base station are separated, one or more RUs are connected to one DU through a wired network, and one or more RUs geographically distributed to cover a specific area are disposed. Hereinafter, a deployment structure and extension examples of a base station according to various embodiments of the present disclosure will be described through FIG. 2A to FIG. 2B.

FIG. 2A illustrates a fronthaul interface according to embodiments. Unlike backhaul between a base station and a core network, fronthaul refers to a connection between entities between a wireless LAN and the base station. FIG. 2A illustrates an example of a fronthaul structure between a DU 210 and a RU 220, but this is only for convenience of explanation and the present disclosure is not limited thereto. In other words, an embodiment of the present disclosure may also be applied to a fronthaul structure between one DU and a plurality of RUs. For example, an embodiment of the present disclosure may be applied to a fronthaul structure between one DU and two RUs. In addition, an embodiment of the present disclosure may be applied to a fronthaul structure between one DU and three RUs.

Referring to FIG. 2A, a base station 110 may include the DU 210 and the RU 220. Fronthaul 215 between the DU 210 and the RU 220 may be operated through an Fx interface. For an operation of the fronthaul 215, for example, an interface such as an enhanced common public radio interface (eCPRI) and radio over ethernet (ROE) may be used.

As communication technology is developed, mobile data traffic has increased, and accordingly, a bandwidth requirement required by the fronthaul between a digital unit and the wireless unit has increased significantly. In a deployment such as a centralized/cloud radio access network (C-RAN), the DU may be implemented to perform functions for a packet data convergence protocol (PDCP), a radio link control (RLC), a media access control (MAC), and a physical (PHY), and the RU may be implemented to further perform functions for a PHY layer in addition to a radio frequency (RF) function.

The DU 210 may be in charge of an upper layer function of a wireless network. For example, the DU 210 may perform a function of a MAC layer and a portion of the PHY layer. Here, the portion of the PHY layer, which is performed at a higher level among functions of the PHY layer, may include, as an example, channel encoding (or channel decoding), scrambling (or descrambling), modulation (or demodulation), layer mapping (or layer demapping). According to an embodiment, in case that the DU 210 conforms to an O-RAN standard, it may be referred to as an O-RAN DU (O-DU). The DU 210 may be represented by being replaced with a first network entity for a base station (e.g., gNB) in embodiments of the present disclosure as needed.

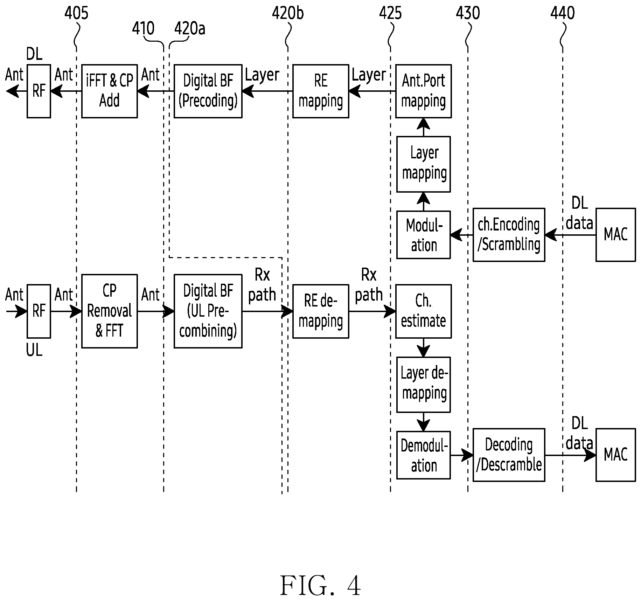

The RU 220 may be in charge of a lower layer function of the wireless network. For example, the RU 220 may perform a portion of the PHY layer and an RF function. Herein, the portion of the PHY layer, which is performed at a relatively lower level than the DU 210 among the functions of the PHY layer, may include, as an example, iFFT conversion (or FFT conversion), CP insertion (CP removal), and digital beamforming. An example of this specific function split is described in detail in FIG. 4. The RU 220 may be referred to as an 'access unit (AU)', an 'access point (AP)', a 'transmission/reception point (TRP)', a 'remote radio head (RRH)', a 'radio unit (RU)', or another term having a technical meaning equivalent thereto. According to an embodiment, in case that the RU 220 conforms to the O-RAN standard, it may be referred to as an O-RAN RU (O-RU). The RU 220 may be represented by being replaced with a second network entity for the base station (e.g., gNB) in embodiments of the present disclosure as needed.

It is described that the base station 110 includes the DU 210 and the RU 220 in FIG. 2A, but embodiments of the present disclosure are not limited thereto. The base station according to embodiments may be implemented as a distributed deployment in accordance with a centralized unit (CU) configured to perform a function of upper layers (e.g., a packet data convergence protocol (PDCP), a radio resource control (RRC)) of an access network, and a distributed unit (DU) configured to perform a function of lower layers. At this time, the distributed unit (DU) may include the digital unit (DU) and the radio unit (RU) of FIG. 1. Between a core (e.g., a 5G core (5GC) or a next generation core (NGC)) network and a wireless network (RAN), the base station may be implemented in a structure in which the CU, the DU, and the RU are disposed in an order. An interface between the CU and the distributed unit (DU) may be referred to as an F1 interface.

The centralized unit (CU) may perform the function of the upper layers than the DU by being connected to one or more DUs. For example, the CU may be in charge of a function of a radio resource control (RRC) layer and a packet data convergence protocol (PDCP) layer, and the DU and RU may be in charge of the function of the lower layers. The DU may perform partial functions (high PHY) of a radio link control (RLC) layer, a media access control (MAC) layer, and a physical (PHY) layer, and the RU may be in charge of remaining functions (low PHY) of the PHY layer. In addition, as an example, the digital unit (DU) may be included in the distributed unit (DU) in accordance with distributed deployment implementation of the base station. Hereinafter, unless otherwise defined, it is described as operations of the digital unit (DU) and the RU, but various embodiments of the present disclosure may be applied to a base station deployment including the CU or a deployment in which the DU is directly connected to the core network (i.e., the CU and the DU are integrated and implemented a base station (e.g., an NG-RAN node), which is one entity).

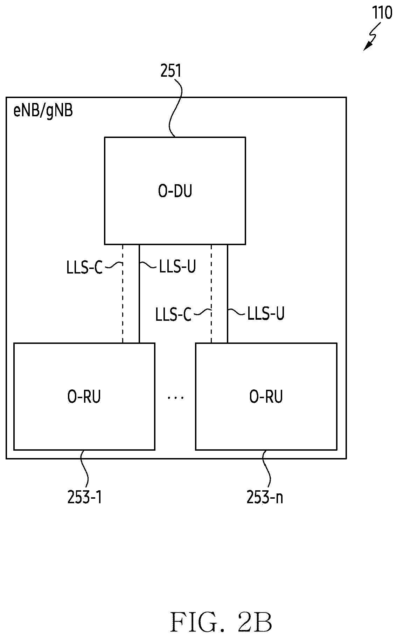

FIG. 2B illustrates a fronthaul interface of an open (O)-radio access network (RAN) according to embodiments. As a base station 110 in accordance with a distributed deployment, an eNB or a gNB is illustrated.

Referring to FIG. 2B, the base station 110 may include an O-DU 251 and O-RUs 253-1, . . ., 253-n. Hereinafter, for convenience of explanation, an operation and a function for the O-RU 253-1 may be understood as a description of each of other O-RUs (e.g., O-RU 253-n).

The O-DU 251 is a logical node including functions among functions of a base station (e.g., the eNB and the gNB) in accordance with FIG. 4 to be described below, except for functions exclusively allocated to the O-RU 253-1. The O-DU 251 may control the operation of the O-RUs 253-1, ..., 253-n. The O-DU 251 may be referred to as a lower layer split (LLS) central unit (CU). The O-RU 253-1 is a logical node including a subset among the functions of the base station (e.g., the eNB and the gNB) in accordance with FIG. 4 to be described later. A real-time aspect of control plane (C-plane) communication and user plane (U-plane) communication with the O-RU 253-1 may be controlled by the O-DU 251.

The O-DU 251 may perform communication with the O-RU 253-1 through the LLS interface. The LLS interface corresponds to the fronthaul interface. The LLS interface means a logical interface between the O-DU 251 and the O-RU 253-1, using a lower layer functional split (i.e., an intra-PHY-based functional split). An LLS-C between the O-DU 251 and the O-RU 253-1 provides a C-plane through the LLS interface. An LLS-U between the O-DU 251 and the O-RU 253-1 provides a U-plane through the LLS interface.

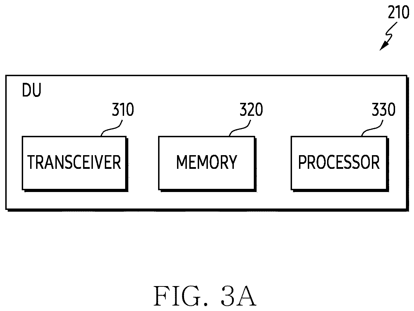

In FIG. 2B, entities of the base station 110 are referred to and described as an O-DU and an O-RU, in order to explain an O-RAN. However, this name does not constitute limiting embodiments of the present disclosure. In embodiments described through FIG. 3A to FIG. 9, of course, operations of the DU 210 may be performed by the O-DU 251. A description of the DU 210 may be applied to the O-DU 251. Likewise, in embodiments described through FIG. 3A to FIG. 9, of course, operations of the RU 220 may be performed by the O-RU 253-1. A description of the RU 220 may be applied to the O-DU 253-1.

FIG. 3A illustrates a functional configuration of a distributed unit (DU) according to embodiments. A configuration exemplified in FIG. 3A may be understood as a configuration of the DU 210 of FIG. 2A (or the O-DU 250 of FIG. 2B) as a portion of a base station. A term such as '...unit', '...device', and the like, used hereinafter may mean a unit that processes at least one function or operation, which may be implemented as hardware or software or a combination of the hardware and the software.

Referring to FIG. 3A, the DU 210 includes a transceiver 310, memory 320, and a processor 330.

The transceiver 310 may perform functions for transmitting and receiving a signal in a wired communication environment. The transceiver 310 may include a wired interface for controlling a direct connection between a device and a device through a transmission medium (e.g., a copper wire and an optical fiber). For example, the transceiver 310 may transmit an electrical signal to another device through the copper wire or may perform conversion between an electrical signal and an optical signal. The DU 210 may perform communication with a radio unit (RU) through the transceiver 310. The DU 210 may be connected to a core network or a CU of a distributed deployment through the transceiver 310.

The transceiver 310 may also perform the functions for transmitting and receiving the signal in a wireless communication environment. For example, the transceiver 310 may perform a conversion function between a baseband signal and a bit string according to a physical layer standard of a system. For example, when transmitting data, the transceiver 310 generates complex symbols by encoding and modulating a transmission bit string. In addition, when receiving data, the transceiver 310 restores a reception bit string by demodulating and decoding the baseband signal. In addition, the transceiver 310 may include a plurality of transmission/reception paths. In addition, according to an embodiment, the transceiver 310 may be connected to a core network or to other nodes (e.g., integrated access backhaul (IAB)).

The transceiver 310 may transmit and receive a signal. For example, the transceiver 310 may transmit a management plane (M-plane) message. For example, the transceiver 310 may transmit a synchronization plane (S-plane) message. For example, the transceiver 310 may transmit a control plane (C-plane) message. For example, the transceiver 310 may transmit a user plane (U-plane) message. For example, the transceiver 310 may receive the user plane message. Although only the transceiver 310 is illustrated in FIG. 3A, according to another implementation example, the DU 210 may include two or more transceivers.

The transceiver 310 transmits and receives the signal as described above. Accordingly, all or a portion of the transceiver 310 may be referred to as a 'communication unit', a 'transmission unit', a 'reception unit', or a 'transmission/reception unit'. In addition, in the following description, transmission and reception performed through a wireless channel are used to mean that includes processing performed by the transceiver 310 as described above.

Although not illustrated in FIG. 3A, the transceiver 310 may further include a backhaul transceiver to be connected with a core network or another base station. The backhaul transceiver provides an interface for performing communication with other nodes in a network. In other words, the backhaul transceiver converts a bit string transmitted from a base station to another node, for example, which is as another access node, another base station, an upper node, a core network, and the like, into a physical signal, and converts the physical signal received from the other node into a bit string.

The memory 320 stores data such as a basic program, an application program, setting information, and the like for an operation of the DU 210. The memory 320 may be referred to as a storage unit. The memory 320 may be configured with volatile memory, non-volatile memory, or a combination of volatile memory and nonvolatile memory. In addition, the memory 320 provides data stored according to a request of the processor 330.

The processor 330 controls overall operations of the DU 210. The processor 380 may be referred to as a control unit. For example, the processor 330 transmits and receives a signal through the transceiver 310 (or through a backhaul communication unit). In addition, the processor 330 records and reads data in the memory 320. In addition, the processor 330 may perform functions of a protocol stack required by a communication standard. Although only the processor 330 is illustrated in FIG. 3A, according to another implementation example, the DU 210 may include two or more processors.

A configuration of the DU 210 illustrated in FIG. 3A is only an example, and an example of the DU performing embodiments of the present disclosure is not limited from a configuration illustrated in FIG. 3A. In partial embodiments, a partial configuration may be added, deleted, or changed.

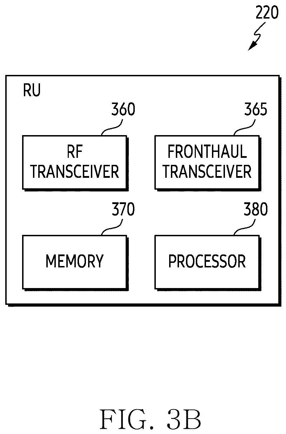

FIG. 3B illustrates a functional configuration of a radio unit (RU) according to embodiments. A configuration exemplified in FIG. 3B may be understood as a configuration of the RU 220 of FIG. 2B or the O-RU 253-1 of FIG. 2B as a portion of a base station. A term such as '...unit', '...device', and the like, used hereinafter may mean a unit that processes at least one function or operation, which may be implemented as hardware or software or a combination of hardware and software.

Referring to FIG. 3B, the RU 220 includes an RF transceiver 360, a fronthaul transceiver 365, memory 370, and a processor 380.

The RF transceiver 360 performs functions for transmitting and receiving a signal through a wireless channel. For example, the RF transceiver 360, after up-converting a baseband signal into an RF band signal, transmits it through an antenna, and down-converts the RF band signal received through the antenna into the baseband signal. For example, the RF transceiver 360 may include a transmission filter, a reception filter, an amplifier, a mixer, an oscillator, a DAC, an ADC, and the like.

The RF transceiver 360 may include a plurality of transmission/reception paths. Furthermore, the RF transceiver 360 may include an antenna unit. The RF transceiver 360 may include at least one antenna array configured with a plurality of antenna elements. In terms of hardware, the RF transceiver 360 may be configured with digital circuitry and analog circuitry (e.g., a radio frequency integrated circuit (an RFIC)). Herein, the digital circuitry and the analog circuitry may be implemented as one package. Also, the RF transceiver 360 may include a plurality of RF chains. The RF transceiver 360 may perform beamforming. The RF transceiver 360 may apply a beamforming weight to a signal to be transmitted/received in order to give a direction according to a setting of the processor 380. According to an embodiment, the RF transceiver 360 may include a radio frequency (RF) block (or an RF unit).

According to an embodiment, the RF transceiver 360 may transmit and receive a signal on a radio access network. For example, the RF transceiver 360 may transmit a downlink signal. The downlink signal may include a synchronization signal (SS), a reference signal (RS) (e.g., a cell-specific reference signal (CRS), a demodulation (DM)-RS), system information (e.g., MIB, SIB, remaining system information (RMSI), other system information (OSI)), a configuration message, control information, or downlink data, and the like. In addition, for example, the RF transceiver 360 may receive an uplink signal. The uplink signal may include a random access related signal (e.g., a random access preamble (RAP)) (or a message 1 (Msg1), a message 3 (Msg3)), a reference signal (e.g., a sounding reference signal (SRS), a DM-RS), or a power headroom report (PHR), and the like. Only the RF transceiver 360 is illustrated in FIG. 3B, but according to another implementation example, the RU 220 may include two or more RF transceivers.

The fronthaul transceiver 365 may transmit and receive a signal. According to an embodiment, the fronthaul transceiver 365 may transmit and receive the signal on a fronthaul interface. For example, the fronthaul transceiver 365 may receive a management plane (M-plane) message. For example, the fronthaul transceiver 365 may receive a synchronization plane (S-plane) message. For example, the fronthaul transceiver 365 may receive a control plane (C-plane) message. For example, the fronthaul transceiver 365 may transmit a user plane (U-plane) message. For example, the fronthaul transceiver 365 may receive a user plane message. Only the fronthaul transceiver 365 is illustrated in FIG. 3B, but according to another implementation example, the RU 220 may include two or more fronthaul transceivers.

The RF transceiver 360 and the fronthaul transceiver 365 transmit and receive the signal as described above. Accordingly, all or a portion of the RF transceiver 360 and the fronthaul transceiver 365 may be referred to as a 'communication unit', a 'transmission unit', a 'reception unit', or a 'transmission/reception unit'. In addition, in the following description, transmission and reception performed through a wireless channel are used to mean that includes processing performed by the RF transceiver 360 as described above. In the following description, transmission and reception performed through the wireless channel are used to mean that includes processing performed by the RF transceiver 360 as described above.

The memory 370 stores data such as a basic program, an application program, setting information, and the like for an operation of the RU 220. The memory 370 may be referred to as a storage unit. The memory 370 may be configured with volatile memory, non-volatile memory, or a combination of volatile memory and nonvolatile memory. In addition, the memory 370 provides data stored according to a request of the processor 380. According to an embodiment, the memory 370 may include memory for a condition, a command, or a setting value related to an SRS transmission method.

The processor 380 controls overall operations of the RU 220. The processor 380 may be referred to as a control unit. For example, the processor 380 transmits and receives a signal through the RF transceiver 360 or the fronthaul transceiver 365. In addition, the processor 380 records and reads data in the memory 370. In addition, the processor 380 may perform functions of a protocol stack required by a communication standard. Although only the processor 380 is illustrated in FIG. 3B, according to another implementation example, the RU 220 may include two or more processors. The processor 380, which is an instruction set or a code, stored in the memory 370, may be instruction/code at least temporarily resided in the processor 380 or a storage space in which instruction/code is stored, or may be a portion of circuitry configuring the processor 380. In addition, the processor 380 may include various modules for performing communication. The processor 380 may control the RU 220 to perform operations according to embodiments to be described below.

A configuration of the RU 220 illustrated in FIG. 3B is only an example, and an example of the RU performing embodiments of the present disclosure is not limited from a configuration illustrated in FIG. 3B. In partial embodiments, a partial configuration may be added, deleted, or changed.

FIG. 4 illustrates an example of a function split between a DU and an RU according to embodiments. As wireless communication technology is developed (e.g., introduction of a 5th generation (5G) communication system or a new radio (NR) communication system), a used frequency band has increased much further. As a cell radius of a base station is very small, the number of RUs required to be installed further has increased. In addition, in the 5G communication system, as an amount of data transmitted has increased significantly by more than 10 times, a transmission capacity of a wired network transmitted to fronthaul has increased significantly. Due to the above-described factors, an installation cost of the wired network in the 5G communication system may be very significantly increased. Therefore, in order to reduce the transmission capacity of the wired network and reduce the installation cost of the wired network, 'function split' may be used to lower the transmission capacity of the fronthaul by transferring partial functions of a modem of the DU to the RU.

In order to reduce a burden of the DU, a role of the RU in charge of only an existing RF function may be extended to a partial function of a physical layer. As the RU performs a function of a higher layer, a throughput of the RU increases, increasing a transmission bandwidth at the fronthaul, and at the same time lowering a delay time requirement constraint due to response processing. Meanwhile, as the RU performs the function of the higher layer, a virtualization gain decreases and a size, a weight, and a cost of the RU increase. In consideration of a trade-off of the above-described advantages and disadvantages, it is required to implement an optimal function split.

Referring to FIG. 4, function spits in a physical layer less than or equal to a MAC layer are illustrated. In case of a downlink (DL) that transmits a signal to a terminal through a wireless network, a base station may sequentially perform channel encoding/scrambling, modulation, layer mapping, antenna mapping, RE mapping, digital beamforming (e.g., precoding), iFFT conversion/CP insertion, and RF conversion. In case of a uplink (UL) that receives a signal from the terminal through the wireless network, the base station may sequentially perform RF conversion, FFT conversion/CP removal, digital beamforming (pre-combining), RE demapping, channel estimation, layer demapping, demodulation, decoding/descrambling. A split for uplink functions and downlink functions may be defined in various types according to the above-described trade-off by necessity between vendors, discussion of a standard, and the like.

In a first function split 405, the RU performs an RF function and the DU performs a PHY function. The first function split, which is that the PHY function in the RU is not substantially implemented, may be referred to as an Option 8, as an example. In a second function split 410, the RU performs the iFFT conversion/CP insertion in a DL of the PHY function and the FFT conversion/CP removal in a UL, and the DU performs remaining PHY functions. As an example, the second function split 410 may be referred to as an Option 7-1. In a third function split 420a, the RU performs the iFFT conversion/CP insertion in the DL of the PHY function, the FFT conversion/CP removal and digital beamforming in the UL, and the DU performs remaining PHY functions. As an example, the third function split 420a may be referred to as an Option 7-2x Category A. In a fourth function split 420b, the RU performs up to the digital beamforming in both the DL and the UL , and the DU performs upper PHY functions after the digital beamforming. As an example, the fourth function split 420b may be referred to as an Option 7-2x Category B. In a fifth function split 425, the RU performs up to the RE mapping (or the RE demapping) in both the DL and the UL, and the DU performs upper PHY functions after the RE mapping (or the RE demapping). As an example, the fifth function split 425 may be referred to as an Option 7-2. In a sixth function split 430, the RU performs up to the modulation (or the demodulation) in both the DL and the UL, and the DU performs subsequent upper PHY functions after the modulation (or the demodulation). As an example, the sixth function split 430 may be referred to as an Option 7-3. In a seventh function split 440, the RU performs up to the encoding/scrambling (or the decoding/descrambling) in both the DL and the UL, and the DU performs subsequent upper PHY functions after the modulation (or the demodulation). As an example, the seventh function split 440 may be referred to as an Option 6.

According to an embodiment, in case that a large amount of signal processing is expected, such as a FR 1 MMU, a function split (e.g., the fourth function split 420b) in a relatively high layer may be required to reduce a fronthaul capacity. In addition, since a function split (e.g., the sixth function split 430) at too high a layer may complicate a control interface and cause a burden of implementation of the RU by including a plurality of PHY processing blocks in the RU, an appropriate function split may be required according to a deployment and implementation method of the DU and the RU.

According to an embodiment, in case that precoding of data received from the DU may not be processed (i.e., in case that there is a limit to a precoding capability of the RU), the third function split 420a or a lower function split (e.g., the second function split 410) thereof may be applied. Conversely, in case that there is a capability to process the precoding of the data received from the DU, the fourth function split 420b or a higher function split (e.g., the sixth function split 430) thereof may be applied.

Hereinafter, embodiments in the present disclosure are described based on the third function split 420a (which may be referred to as a category A (CAT-A)) or the fourth function split 420b (which may be referred to as a category B (CAT-B)) for performing beamforming processing in the RU unless otherwise specified. An O-RAN standard distinguishes a type of an O-RU in accordance with whether a precoding function is located at an interface of an O-DU or an O-RU interface. An O-RU (i.e., low complexity) in which precoding is not performed may be referred to as a CAT-A O-RU. An O-RU in which precoding is performed may be referred to as a CAT-B O-RU.

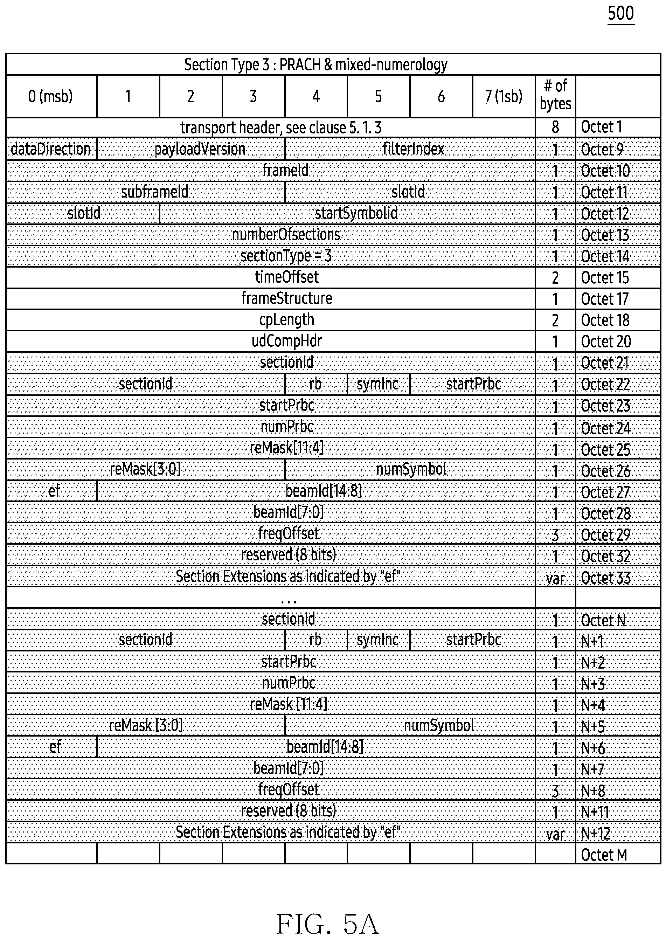

Hereinafter, an upper-PHY means physical layer processing processed in the DU of an fronthaul interface. For example, the upper-PHY may include FEC encoding/decoding, scrambling, and modulation/demodulation. Hereinafter, a lower-PHY means physical layer processing processed by the RU of the fronthaul interface. For example, the lower-PHY may include FFT/iFFT, digital beamforming, and physical random access channel (PRACH) extraction and filtering. However, the above-described criteria do not exclude embodiments through other function splits. A functional configuration, signaling, or an operation of FIGS. 5A to 9 to be described later may be applied not only to the third function split 420a or the fourth function split 420b but also to another function split.

Embodiments of the present disclosure are exemplarily described a standard of an eCPRI and an O-RAN as fronthaul interfaces when transmitting a message between the DU (e.g., the DU 210 of FIG. 2A) and the RU (e.g., the RU 220 of FIG. 2A). An ethernet payload of the message may include an eCPRI header, an O-RAN header, and an additional field. Hereinafter, various embodiments of the present disclosure are described by using a standard term of the eCPRI or the O-RAN, but other expressions having an equivalent meaning to each term may be used in place of various embodiments of the present disclosure.

In a transport protocol of the fronthaul, ethernet and the eCPRI, which are easy to share with a network, may be used. The eCPRI header and the header of the O-RAN may be included in the ethernet payload. The eCPRI header may be located at a front end of the ethernet payload. A content of the eCPRI header are as follows.
1) ecpriVersion (4 bits): This parameter indicates an eCPRI protocol version.
2) ecpriReserved (3 bits): This parameter is reserved for a further use of the eCPRI.
3) ecpriConcatenation (1 bit): This parameter indicates when an eCPRI concatenation is in use.
4) ecpriMessage (1 byte): This parameter indicates a type of a service carried by a message type. For example, the parameter indicates an IQ data message, a real-time control data message, or a transmission network delay measurement message.
5) ecpriPayload (2 bytes): This parameter indicates a byte size of a payload portion of an eCPRI message.
6) ecpriRtcid/ecpriPcid (2 bytes): This parameter is an eAxC (extended Antenna-carrier (eAxC)) identifier (eAxC ID) and is used to identify a specific data flow related to each a C-plane (ecpriRtcid) message or a U-plane (ecpriPcid) message.
7) ecpriSeqid (2 bytes): This parameter provides unique message identification and order at two levels. A first octet of this parameter is a sequence ID used to identify an order of a message in an eAxC message stream, and the sequence ID is used to ensure that all messages are received and to rearrange messages that are out of the order. A second octet of this parameter is a subsequence ID. The subsequence ID is used to ensure and implement reordering an order when radio-transport-level (eCPRI or IEEE-1914.3) fragmentation occurs.

The eAxC identifier (ID) includes a band and sector identifier ('BandSector_ID'), a component carrier identifier ('CC_ID'), a spatial stream identifier ("RU_Port_ID') and a distributed unit identifier ('DU_Port_ID'). Bit allocation of the eAxC ID may be distinguished as follows.
1) DU_port ID: DU_port ID is used to distinguish processing units in the O-DU (e.g., other baseband cards). It is expected that the O-DU allocates bits for the DU_port ID, and the O-RU attaches the same value to an UL U-Plan message delivering the same sectionId data.
2) BandSector_ID: An aggregated cell identifier (distinguish a band and a sector supported by the O-RU).
3) CC_ID: CC_ID distinguishes a carrier component supported by the O-RU.
4) RU_port ID: RU_port ID specifies logical flows such as a data layer or a spatial stream, and logical flows such as a signal channel that require special antenna allocation such as separate numerologies (e.g., PRACH) or an SRS.

An application protocol of the fronthaul may include a control plane (C-plane), a user plane (U-plane), a synchronization plane (S-plane), and a management plane (M-plane).

The control plane may be configured to provide scheduling information and beamforming information through a control message. The control plane means real-time control between the DU and the RU. The user plane may include IQ sample data transmitted between the DU and the RU. The user plane may include downlink data (IQ data or SSB/RS), uplink data (IQ data or SRS/RS), or PRACH data of a user. A weight vector of the beamforming information described above may be multiplied by the data of the user. The synchronization plane generally means traffic between the DU and the RU for a synchronization controller (e.g., an IEEE grandmaster). The synchronization plane may be related to timing and synchronization. The management plane means non-real-time control between the DU and the RU. The management plane may be related to an initial setup, a non-realtime reset, or a reset, and a non-realtime report.

A message of the control plane, i.e., the C-plane message, may be encapsulated based on a two-layer header approach method. A first layer may be configured with an eCPRI common header or an IEEE 1914.3 common header, including fields used to indicate a message type. A second layer is an application layer including fields necessary for control and synchronization. In the application layer, a section defines a characteristic of U-plane data transmitted or received in a beam having one pattern ID. Section types supported in the C-plane are as follows.

The section type may indicate a use of the control message transmitted from the control plane. For example, a use for each section type is as follows.
1) sectionType=0: Used to indicate resource blocks or symbols not used by a DL or an UL.
2) sectionType=1: Used for most DL/UL wireless channels. Herein, "most" indicates channels that do not require time or frequency offset, such as those required for mixed numerology channels.
3) sectionType=2: reserved for further use.
4) sectionType=3: the PRACH and the mixed-numerology channel. A channel requiring time or frequency offset or different from a nominal SCS value(s).
5) sectionType=4: reserved for further use.
6) sectionType=5: UE scheduling information. Transmits UE scheduling information so that the RU may calculate a real-time BF weight (an O-RAN optional BF method).
7) sectionType=6: UE-specific channel information transmission. Periodically transmits UE channel information so that the RU may calculate the real-time BF weight (the O-RAN optional BF method).
8) sectionType=7: Used for LAA support.
9) sectionType=8: Used for ACK/NACK Feedback.

A new radio (NR) standard of 3GPP, which is a recent 5th generation data transmission method, supports various numerologies according to a frequency range (FR). That is, the supported numerology may vary in accordance with a frequency band of an operating frequency. The numerology indicates a subcarrier spacing (SCS) and a symbol length in an orthogonal frequency-division multiplexing (OFDM) system.

Due to a characteristic of OFDM, as the SCS increases, the length of the symbol is shorter. Conversely, as the SCS is smaller, the length of the symbol is longer. The SCS is inversely proportional to the length of the symbol. The length of the symbol affects a length of a cyclic prefix (CP). The CP is inserted at a front of the symbol to reduce inter-symbol interference (ISI) due to a time delay of a reflected wave. One slot in a NR system may include 14 symbols. Each symbol may include the CP.

As the operating frequency increases, straightness of a signal is stronger, so that a delay due to multi-path decreases. Therefore, a relatively short symbol length is sufficient for the OFDM system with a high operating frequency. In addition, an oscillator that generates a carrier frequency causes phase noise fluctuating the phase when generating a high frequency. As the phase noise generates jitter in a time axis, a relatively short unit of time is required to compensate for the jitter. Therefore, a large SCS and a short length of an OFDM symbol is required at the high frequency.

A FR 1 of the 3GPP NR indicates a range from 410 megahertz (MHz) to 7125 MHz. A FR 2 of the 3GPP NR indicates a range from 24250 megahertz (MHz) to 52600 MHz. Recently, the 3GPP NR standard has been completed by Release 17, and a discussion of standardization of Release 18 is underway. The 3GPP has agreed to support an additional frequency range (e.g., a frequency range (FR) 2-2 of the 3GPP NR) from 52.6 gigahertz (GHz) to 71 GHz. Furthermore, as an ultra-high frequency band, a terahertz band is under discussion, following millimeter wave (mmWave). The terahertz band is a band range from 0.1 THz (teraertz) to 1 THz, and aims to transmit a large amount of data at a short distance with visibility communication.

The Release 17 of a current 3GPP NR standard supports the following numerologies.

**[Table 1]**

| ***µ*** | ***Δf*** = **2*^{µ}* · 15** [kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |
| 5 | 480 | Normal |
| 6 | 960 | Normal |

The 'µ' indicates a numerology value. The 'Δf' indicates the SCS. The 'Cyclic prefix' indicates whether the cyclic prefix (CP) is a normal CP or an extended CP.

15 kHz (kilohertz) and 30 kHz are supported in the FR 1. 60 kHz, 120 kHz, and 240 kHz are supported, in the FR 2 (or a FR 2-1). However, as an exception, transmission of synchronization signal (SS)/physical broadcast channel (PBCH) blocks of the FR 2 (or the FR 2-1) uses 120 kHz or 240 kHz. However, another transmission (e.g., a physical downlink shared channel (PDSCH), a physical downlink control channel (PDCCH), a physical uplink shared channel (PUSCH), and a physical uplink control channel (PUCCH)) uses 60 kHz or 120 kHz.

In accordance with recent introduction of a FR 2-2, 480 kHz and 960 kHz are additionally supported as the SCS from the 3GPP Release 17. As such, in accordance with recent confirmation of standard support for the ultra-high frequency band, a demand for more diverse mixed numerology services increases. However, a current O-RAN standard still mentions a maximum value of the SCS as only 240 kHz. Therefore, embodiments of the present disclosure propose a method for supporting additional SCSs (e.g., 480 kHz, 960 kHz) on the O-RAN standard.

FIG. 5A illustrates an example 500 of a control plane (C-plane) message according to embodiments. In FIG. 5A, 'sectionType=3' for a PRACH and mixed-numerology channels is illustrated. However, a section type indicating '3' is only an embodiment, and section extension type information according to embodiments of the present disclosure does not exclude another section type. According to another embodiment, embodiments of the present disclosure may be applied to 'sectionType=0'.

Referring to FIG. 5A, the C-plane message may include a transport header (e.g., an eCPRI header or IEEE 1914.3) information. The transport header may include 'ecpriVersion', 'ecpriReserved', 'ecpriConcatenation', 'ecpriMessage', 'ecpriPayload', 'ecpriRtcid/ecpriPcid', and 'ecpriSeqid' as described above.

The C-plane message may include common header information. The common header information may include 'dataDirection' indicating a data transmission direction of a base station (e.g., gNB), 'payloadVersion' indicating a valid payload protocol version of IEs in an application layer, and 'filterindex' indicating an index for a channel filter between IQ data and an air interface to be used in both a DL and a UL.

The common header information may include information for indicating a location of a time resource to which a message may be applied. The location of the time resource may be indicated by a frame, a subframe, a slot, or a symbol. The common header information may include 'frameId' indicating a frame number, 'subframeId' indicating a subframe number, 'slotId' indicating a slot number, and 'startSymbolId' indicating a symbol number. The frame is determined based on a 256 modulo operation. The subframe has a unit of 1 ms included in a frame of 10 ms. The slot number is numbered in the subframe, and a maximum size may be 1, 2, 4, 8, or 16 in accordance with numerology.

The common header information may include 'numberOfsections' indicating the number of data sections included in the C-plane message. The common header information may include 'sectionType' determining a characteristic of U-plane data. The common header information may include 'timeoffset' defining offset from a start of a slot to a start of a cyclic prefix (CP) as the number of samples (e.g., Ts = 1/30.72 megahertz (MHz)). The common header information may include 'frameStructure' defining a fast fourier transfer (FFT)/ inverse FFT (iFFT) size and a SCS. The common header information may include 'cpLength' defining a CP length as the number of samples (e.g., Ts = 1/30.72 megahertz (MHz)).

The C-plane message may include section information. The section information may include 'sectionId' which means a section identifier. In case that a coupling of a C-Plane and a U-Plane through the 'sectionId' is used, the 'sectionId' identifies an individual data section described by a data section description in the C-Plane message. A purpose of the 'sectionId' is to map a U-Plane data section to corresponding the C-Plane message (and a section type) related to data. The section information may include 'rb' indicating whether every RB is used or every other RB is used, 'symInc' meaning a symbol number increment command, 'startPrbc' for indicating a starting PRB number of a data section description, 'numPrbc' for indicating the number of consecutive PRBs for each data section description, 'reMask' defining a RE mask in the PRB, 'numSymbol' defining the number of physical random access channel (PRACH) repetitions or the number of symbols to which section control is applied, 'ef for indicating an extension flag, and 'beamId' defining a beam pattern to be applied to the U-plane data. The section information may include 'freqOffset', defining frequency offset for a carrier center frequency before additional filtering (e.g., in case of the PRACH) and FFT processing (in case of the UL) in a unit of half the SCS.

In FIG. 5A, 'frameStructure' included in the common header information defines a frame structure. The 'frameStructure' may indicate the FFT/iFFT size and the SCS. For example, for the frame structure, the following table may be referenced.

**[Table 2]**

| | | | | | | | | | |
|---|---|---|---|---|---|---|---|---|---|
| 0(ms b) | 1 | 2 | 3 | 4 | 5 | 6 | 7(lsb) | Numbe r of Octects | |
| FFT Size | | | | µ (Subcarrier spacing) | | | | 1 | Octet 1 |

A first portion (e.g., most significant bit (MSB) 4-bit) of the 'frameStructure' may indicate the 'FFT Size' parameter. The 'FFT Size' parameter defines the FFT/iFFT size used for all IQ data processing related to the C-plane message. A second portion (e.g., least significant bit (LSB) 4-bit) of the 'frameStructure' may indicate the 'µ' parameter. The 'µ' parameter defines the number of slots per 1 milliseconds (ms) and the SCS, considering an LTE standard (e.g., TS 36.211) and a NR standard (e.g., TS 38.211). The 'µ' parameter may be extended to apply to PRACH processing. Meanwhile, the provided "FFT Size" parameter is intended to facilitate calculation and is not intended to strictly dictate a time-frequency conversion method of a RU.

For the 'FFT Size' parameter, the following table may be referenced.

**[Table 3]**

| Value of IE "FFT_size" | FFT/iFFT size |
|---|---|
| 0000b | Reserved (no FFT/iFFT processing) |
| 0001b...0110b | Reserved |
| 0111b | 128 |
| 1000b | 256 |
| 1001b | 512 |
| 1010b | 1024 |
| 1011b | 2048 |
| 1100b | 4096 |
| 1101b | 1536 |
| 1110, 1111b | Reserved |

As described above, in accordance with introduction of a FR 2-2, 480 kHz and 960 kHz are additionally supported as the SCS from 3GPP Release 17. In order to support various numerologies of the RU, a DU may transmit the C-plane message for indicating additional SCSs to the RU . For backward compatibility, values indicating 15 kHz, 30 kHz, 60 kHz, 120 kHz, and 240 kHz in an existing standard may be used equally. According to an embodiment, for the 'µ' parameter, the following table may be referenced.

**[Table 4]**

| Value of IE "SCS" | 3GPP "µ" | Subcarrier spacing Δf | Number of slots per 1ms subframe: Nₛₗₒₜ | Slot length |
|---|---|---|---|---|
| 0000b | 0 | 15 kHz | 1 | 1ms |
| 0001b | 1 | 30 kHz | 2 | 500µs |
| 0010b | 2 | 60 kHz | 4 | 250µs |
| 0011b | 3 | 120 kHz | 8 | 125µs |
| 0100b | 4 | 240 kHz | 16 | 62.5µs |
| 0101b | 5 | 480 kHz | 32 | 31.25µs |
| 0110b | 6 | 960 kHz | 64 | 15.625µs |
| 0111b...1011b | NA | Reserved | Reserved | Reserved |
| 1100b | NA | 1.25 kHz | 1 | 1ms |
| 1101b | NA | 3.75 kHz (LTE-specific) | 1 | 1ms |
| 1110b | NA | 5 kHz | 1 | 1ms |
| 1111b | NA | 7.5 kHz (LTE-specific) | 1 | 1ms |

In addition to 15 kHz, 30 kHz, 60 kHz, 120 kHz, 240 kHz, 480 kHz, 960 kHz, 1.25 kHz and 5 kHz may be supported for an NR PRACH. 3.75 kHz may be supported for the PRACH in narrowband (Nb)- internet of everything (IoT). 15 kHz, 7.5 kHz, and 1.25 kHz may be supported for an LTE PRACH. 1.25 kHz and 7.5 kHz may be supported for the LTE PRACH.

The Table 4 includes support for 480 kHz and 960 kHz, which are the SCS reflected in a current 3GPP Release 17 standard. However, in accordance with development of terahertz technology and an update of a 3GPP standard, additional SCSs (e.g., 1920 kHz, 3840 kHz) may be supported in addition to 480 kHz and 960 kHz. The additional SCSs may be supported in the FR 2-2, or may be supported in a frequency range (e.g., a FR 2-3 (e.g., 71 GHz to 100 GHz) or a FR 3 (e.g., greater than 100 GHz) as defined by future release (e.g., release 18, 19, ...)). For the additional SCSs, the following table may be referenced.

**[Table 5]**

| Value of IE "SCS" | 3GPP "µ" | Subcarrier spacing Δf | Number of slots per 1ms subframe: Nₛₗₒₜ | Slot length |
|---|---|---|---|---|
| 0000b | 0 | 15 kHz | 1 | 1ms |
| 0001b | 1 | 30 kHz | 2 | 500µs |
| 0010b | 2 | 60 kHz | 4 | 250µs |
| 0011b | 3 | 120 kHz | 8 | 125µs |
| 0100b | 4 | 240 kHz | 16 | 62.5µs |
| 0101b | 5 | 480 kHz | 32 | 31.25µs |
| 0110b | 6 | 960 kHz | 64 | 15.625µs |
| 0111b | value #0 | newSCS #0 | Nslot #0 | NewSlotLength #0 |
| 1000b | value #1 | newSCS #1 | Nslot #1 | NewSlotLength #1 |
| 1001b | value #2 | newSCS #2 | Nslot #2 | NewSlotLength #2 |
| 1010b | value #3 | newSCS #3 | Nslot #3 | NewSlotLength #3 |
| 1011b | value #4 | newSCS #4 | Nslot #4 | NewSlotLength #4 |
| 1100b | NA | 1.25 kHz | 1 | 1ms |
| 1101b | NA | 3.75 kHz (LTE-specific) | 1 | 1ms |
| 1110b | NA | 5 kHz | 1 | 1ms |
| 1111b | NA | 7.5 kHz (LTE-specific) | 1 | 1ms |

Additional numerology values (e.g., value #i) may indicate a new SCS (e.g., newSCS #i), the newly defined number of slots (e.g., Nslot #0), and a newly defined slot length (e.g., NewSlotLength #i) (i=0, 1, 2, 3, 4). As an example, value #0, value #1, value #2, value #3, and value #4 may indicate 7, 8, 9, 10, and 11 of the 'µ' parameter, respectively.

The Table 5 exemplifies the values of the 'µ' parameter for indicating five additional SCSs, but the Table 5 merely exemplifies a mapping table in accordance with a SCS expansion, and a description of the Table 5 is not interpreted as limiting embodiments. According to another embodiment, at least a portion of the values of the 'µ' parameter illustrated in the Table 5 may be omitted and processed as 'reserved'.

Meanwhile, according to additional embodiments, the 'µ' parameter of the C-plane message may adaptively use a mapping table in accordance with the Table 4 described above and existing mapping table based on a supported frequency band. Based on the supported frequency band, using the existing mapping table may also be understood as an embodiment of the present disclosure. For the existing mapping table, the following table may be referenced.

**[Table 6]**

| Value of IE "SCS" | 3GPP "µ" | Subcarrier spacing Δf | Number of slots per 1ms subframe: Nₛₗₒₜ | Slot length |
|---|---|---|---|---|
| 0000b | 0 | 15 kHz | 1 | 1ms |
| 0001b | 1 | 30 kHz | 2 | 500µs |
| 0010b | 2 | 60 kHz | 4 | 250µs |
| 0011b | 3 | 120 kHz | 8 | 125µs |
| 0100b | 4 | 240 kHz | 16 | 62.5µs |
| 0101b...1011b | NA | Reserved | Reserved | Reserved |
| 1100b | NA | 1.25 kHz | 1 | 1ms |
| 1101b | NA | 3.75 kHz (LTE-specific) | 1 | 1ms |
| 1110b | NA | 5 kHz | 1 | 1ms |
| 1111b | NA | 7.5 kHz (LTE-specific) | 1 | 1ms |

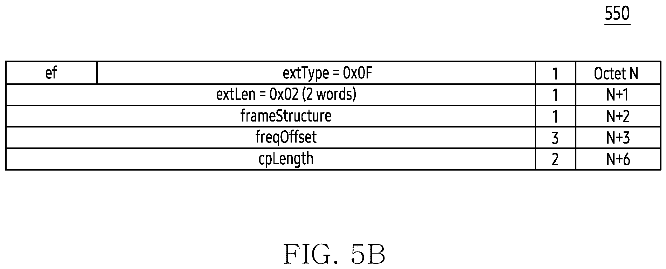

FIG. 5B illustrates an example 550 of section extension information according to embodiments. In FIG. 5B, the section extension information for mixed-numerology information is illustrated. A C-plane message may include section information and the section extension information. Herein, a section type of the section information may be '5' or '6'. That is, the C-plane message may be used for UE scheduling information (sectionType=5) or may be used for transmission of UE-specific channel information (sectionType=6).

Referring to FIG. 5B, the section extension information may include 'extType' that provides an extension type providing additional parameters. The section extension information may include 'ef' indicating whether there is another extension present or whether a current extension field is a last extension. The section extension information may include an 'extLen' providing a length of the section extension in a unit of 32-bit (or 4-byte) words.

The section extension information may include 'frameStructure' for indicating a frame structure. The 'frameStructure' defines an FFT/iFFT size and a SCS. The section extension information may include 'cpLength'. The 'cpLength' defines a CP length as the number of samples (e.g., Ts = 1/30.72 megahertz (MHz)). The section extension information may include 'freqOffset'. The 'freqOffset' defines frequency offset for a carrier center frequency before additional filtering (e.g., in case of a PRACH) and FFT processing (in case of a UL) in a unit of half the SCS. Meanwhile, when the section extension information is applied to a section type 6 ('sectionType=6') a value of 'FFT Size' in the frameStructure and the cpLength may be set to '0'.

According to embodiments, the Table 2 to the Table 6 may be referred for the frame structure indicated by the section extension information. In order to support additional SCSs (e.g., 480 kHz, 960 kHz), the frame structure may indicate the SCS, the number of slots per 1 ms subframe, and a slot length based on the Table 4 to the Table 6.

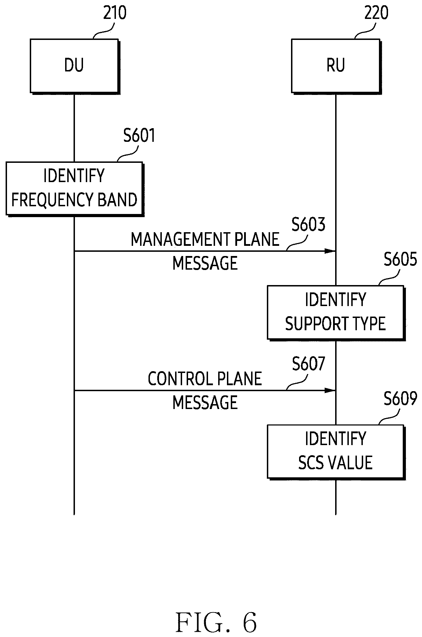

In FIG. 5A to FIG. 5B, the frame structure for providing new SCSs (e.g., 480 kHz, and 960 kHz) is described through the section information of the C-plane message or the section extension information of the C-plane message. Hereinafter, in FIG. 6 to FIG. 9, signaling between the DU and the RU, specific operations of DU, specific operations of RU, and signaling of the DU will be described to identify the SCS through the above-described frame structure.

FIG. 6 illustrates an example of signaling between a DU and an RU to support a subcarrier spacing (SCS) through a management plane message and a C-plane message according to embodiments. The DU exemplifies the DU 210 of FIG. 2A. According to an embodiment, the DU 210 may comprise an O-DU 251. The RU exemplifies the RU 220 of FIG. 2A. According to an embodiment, the RU 220 may comprise an O-RU 253.

Referring to FIG. 6, in an operation S601, the DU 210 may identify a frequency band. The DU 210 may identify a frequency band to be used for a radio access network (RAN) in the RU 220. According to an embodiment, the frequency band may be used to indicate whether a SCS of 480 kHz and a SCS of 960 kHz are available. For example, in case that the frequency band is related to a terahertz frequency, the SCS of 480 kHz and the SCS of 960 kHz are available in the RAN. In case that the frequency band is not related to the terahertz frequency, the SCS corresponding to 480 kHz and the SCS corresponding to 960 kHz are not available in the RAN. For another example, in case that the frequency band is included in a FR 1 or a FR 2-1 of a NR standard, the SCS of 480 kHz and the SCS of 960 kHz are not available in the RAN. Conversely, in case that the frequency band is included in a FR 2-2 of the NR standard, the frequency band is the SCS of 480 kHz and the SCS of 960 kHz are available in the RAN.

According to another embodiment, the frequency band may be used to indicate numerologies in accordance with a frequency range, instead of simply indicating whether to use the SCS corresponding to 480 kHz and the 960 kHz SCS. The DU 210 may identify a frequency range of the identified frequency band. In accordance with the frequency range, available numerologies may vary. For example, a first frequency range of the frequency band may be associated with a first set of numerologies. The first set may include 15 kHz, 30 kHz, and 60 kHz. The first frequency range may correspond to the FR 1 of the NR standard. In addition, for example, a second frequency range of the frequency band may be associated with a second set of numerologies. The second set may include 60 kHz, 120 kHz, and 240 kHz. The second frequency range may correspond to the FR 2-1 of the NR standard. In addition, for example, a third frequency range of the frequency band may be associated with a third set of numerologies. The third set may include 120 kHz, 480 kHz, and 960 kHz. The third frequency range may correspond to the FR 2-2 of the NR standard.

In an operation S603, the DU 210 may transmit a management plane message (hereinafter, M-plane message) to the RU 220. The DU 210 may generate the M-plane message based on the identified frequency band. According to embodiments, the DU 210 may generate the M-plane message for indicating whether at least one SCS (e.g., 480 kHz, 960 kHz) designated to the RU is available based on the identified frequency band. The M-plane message may include information on the frequency band. The M-plane message may include information indicating whether at least one designated SCS (e.g., 480 kHz, 960 kHz) is available. For example, a first value of the information may indicate that 480 kHz and 960 kHz are supported. A second value of the information may indicate that 480 kHz and 960 kHz are not supported. According to an embodiment, the M-plane message may transmit a set of SCSs that may be supported to the RU through optional multi-vendor functionality of a O-RAN standard. For example, 'frequencyBand' information may be added as an 'optical multi-vendor' item. For example, in case that a value of the 'frequencyBand' information is 0, the 'frequencyBand' information may indicate current frequency band numerologies. In case that the value of the 'frequencyBand' information is 1, the 'frequencyBand' information may indicate high-frequency band (e.g., a terahertz band) numerologies.

According to other embodiments, instead of indicating whether to use specific SCSs, the DU 210 may generate the M-plane message for directly indicating the set of SCSs available to the RU based on the identified frequency band. According to an embodiment, the M-plane message may include information on the frequency band. The information on the frequency band may include a number of the frequency band or an index related to the frequency range to which the frequency band belongs. For example, a plurality of frequency ranges may be mapped to a plurality of indexes, respectively. An index of the M-plane message may be used to indicate the set of SCSs available to the RU. In addition, according to another embodiment, the M-plane message may include information for directly indicating the set of available SCSs. For example, a plurality of sets may be mapped to the plurality of indexes, respectively. The index of the M-plane message may be used to directly indicate the set of SCSs available to the RU.

In an operation S605, the RU 220 may identify a support type. The support type means the set of SCSs available in the RU 220. According to an embodiment, the support type may indicate whether the SCSs of 480 kHz and 960 kHz are available. The set of SCSs in accordance with a first type may include 480 kHz and 960 kHz. The set of SCSs in accordance with a second type different from the first type may not include 480 kHz and 960 kHz. According to another embodiment, the support type may indicate the SCSs defined in accordance with the frequency range (FR). For example, the first set of numerologies may include 15 kHz, 30 kHz, and 60 kHz. The second set of numerologies may include 60 kHz, 120 kHz, and 240 kHz. The third set may include 120 kHz, 480 kHz, and 960 kHz.

In an operation S607, the DU 210 may transmit a C-plane message (hereinafter, C-plane message) to the RU 220. The RU 220 may receive the C-plane message from the DU 210.

In partial embodiments, the RU 220 may obtain section information of the C-plane message. The section information of the C-plane message may include a frame structure according to embodiments. According to an embodiment, a section type of the C-plane message may be '0'. According to another embodiment, the section type of the C-plane message may be '3'. The section information including the frame structure may be referred to the description for FIG. 5A.

In partial embodiments, the RU 220 may obtain section extension information of the C-plane message. The section extension information of the C-plane message may include the frame structure according to embodiments. According to an embodiment, a type (i.e., ExtType) of the section extension information may be '15'. At this time, a section type of the section information coupled to the section extension information may be '5' or '6'. The section extension information including the frame structure may be referred to the description for FIG. 5B.

In an operation S609, the RU 220 may identify a SCS value. The frame structure according to embodiments may indicate an FFT/iFFT size and the SCS value to be used. In order to obtain the SCS value to be used from bits of the frame structure, the RU may use a mapping table in which a relationship between the bits and the SCS value is defined. The RU may obtain the SCS value to be used based on the mapping table. The mapping table may be identified based on the M-plane message of the operation S603.

According to an embodiment, the RU may identify the mapping table among the Table 4 to the Table 6 based on a setting value included in the M-plane message. For example, in case that the index of the M-plane message indicates that the SCS of 480 kHz and the SCS of 960 kHz are available, the RU may identify the SCS value based on the Table 4. In case that the index of the M-plane message indicates that the SCS of 480 kHz and the SCS of 960 kHz are not available, the RU may identify the SCS value based on the Table 6. For another example, in case that the index of the M-plane message indicates a first value (e.g., Normal(0)), the RU may identify the SCS value based on the Table 6. The first value may indicate that the SCS of 480 kHz and the SCS of 960 kHz are not available. In case that the index of the M-plane message indicates a second value (e.g., TerahertzAvailable(1)), the RU may identify the SCS value based on the Table 4. The second value may indicate that the SCS of 480 kHz and the SCS of 960 kHz are available, and a new SCS (e.g., newSCS #i) different from the SCS of 480 kHz and the SCS of 960 kHz is not available. In case that the index of the M-plane message indicates a third value (e.g., NewFrequencyAvailable(2)), the RU may identify the SCS value based on the Table 5. The third value may indicate that the SCS of 480 kHz and the SCS of 960 kHz are available, and the SCS of 480 kHz, the SCS of 960 kHz, and the new SCS (e.g., new SCS #i) are available.

In FIG. 6, the SCS of 480 kHz and the SCS of 960 kHz are described as an example, but embodiments of the present disclosure are not limited thereto. SCSs (e.g., 1920 kHz or 3840 kHz) different from the SCS of 480 kHz and the SCS of 960 kHz may also be used in a frequency range (e.g., the FR 2-2, a FR 2-3 (e.g., 71 GHz to 100 GHz), or a FR 3 (e.g., greater than 100 GHz)) or a frequency band additionally defined through the same technical principle.

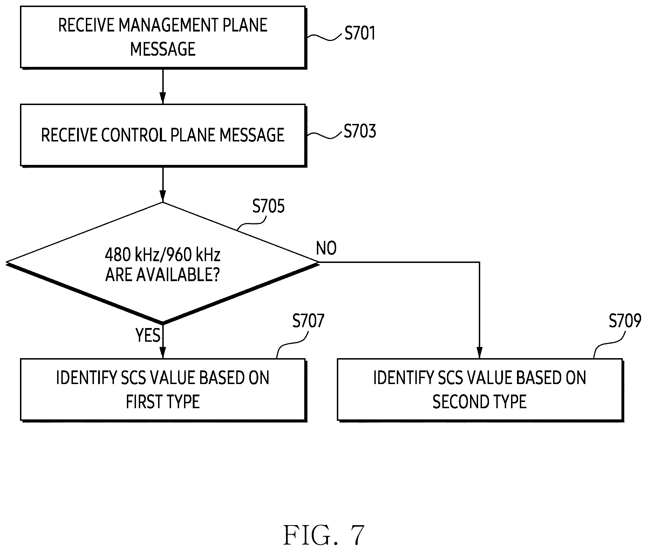

FIG. 7 illustrates an operation flow of an RU for supporting a SCS through an M-plane message and a C-plane message according to embodiments. The RU exemplifies the RU 220 of FIG. 2A. According to an embodiment, the RU 220 may include an O-RU 253.

Referring to FIG. 7, in an operation S701, the RU may receive a management plane message (hereinafter, M-plane message). The M-plane message may include information on a frequency band. The information on the frequency band may be used to indicate whether at least one designated SCS (e.g., 480 kHz, 960 kHz) is used.

In an operation S703, the RU may receive a control plane message (hereinafter, C-plane message). The C-plane message may include information for indicating a SCS value. The information for indicating the SCS value may be referred to as numerology information. The RU may obtain bits corresponding to the numerology information based on the C-plane message. The bits may indicate a specific SCS value.

According to an embodiment, section information of the C-plane message may include a frame structure. For example, a section type of the C-plane message may be '0' (a section type for indicating an idle period or a guard period from a DU to the RU). In addition, for example, the section type of the C-plane message may be '3' (a section type for PRACH and mixed-numerology channels). The frame structure of the section information may be used to indicate an FFT/iFFT size and a SCS. For example, an LSB 4-bit of the frame structure may indicate the SCS.

According to another embodiment, section extension information of the C-plane message may include the frame structure. A type of the section extension information may be '15' (a section extension type for UE ID-based beamforming). The section type of the C-plane message may be '5' (a section type for UE scheduling information) or '6' (a section type for transmitting channel information for specific UE ID). The section extension information may be used to indicate the frame structure, the FFT/iFFT size and the SCS. For example, the LSB 4-bit of the frame structure may indicate the SCS.

In an operation S705, the RU may identify whether a SCS of 480 kHz and a SCS of 960 kHz are available. The RU may identify whether the frequency band supports the SCS of 480 kHz and the SCS of 960 kHz. The RU may identify whether the SCS of 480 kHz and the SCS of 960 kHz are available based on the M-plane message and the C-plane message. For example, the frequency band, which is a frequency band of an additional frequency range, may be a high frequency band compared to a predefined frequency band. As an example, the additional frequency range may correspond to a FR 2-2 of a 3GPP NR. The FR 2-2 of the 3GPP NR supports the SCS of 480 kHz and the SCS of 960 kHz. As another example, the additional frequency range may correspond to a future frequency range (e.g., a FR 2-3 (e.g., 71 GHz to 100 GHz), or a FR 3 (e.g., greater than 100 GHz)) of the 3GPP NR.

The RU may identify a type based on the M-plane message. The type means a characteristic of a table for interpreting bits related to the SCS. The type in accordance with whether the SCS of 480 kHz and the SCS of 960 kHz are available. In case that the SCS of 480 kHz and the SCS of 960 kHz are available, the RU may perform an operation S707. In case that the SCS of 480 kHz and the SCS of 960 kHz are not available, the RU may perform an operation S709.

In the operation S707, in case that the SCS of 480 kHz and the SCS of 960 kHz are available, the RU may identify the SCS value based on a first type. The RU may obtain the SCS value corresponding to the bits related to the SCS based on a table corresponding to the first type. According to an embodiment, the RU may obtain information on the frame structure of the C-plane message. Based on the Table 4, the RU may identify the SCS value corresponding to the LSB 4-bit of the information on the frame structure.

In the operation S709, in case that the SCS of 480 kHz and the SCS of 960 kHz are not available, the RU may identify the SCS value based on a second type. The RU may obtain the SCS value corresponding to the bits related to the SCS based on a table corresponding to the second type. According to an embodiment, the RU may obtain information on the frame structure of the C-plane message. Based on the Table 6, the RU may identify the SCS value corresponding to the LSB 4-bit of the information on the frame structure.

In FIG. 7, two types are illustrated in accordance with whether to use the SCS of 480 kHz and the SCS of 960 kHz, but embodiments of the present disclosure are not limited thereto. For example, in addition to the Table 4 and the Table 6, as additional SCSs are defined, the Table 5 may be used.

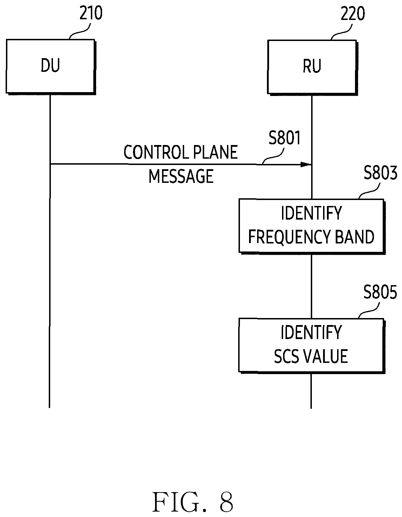

In FIG. 6 to FIG. 7, the DU may first negotiate a set of possible numerologies, i.e., possible SCSs, to the RU through the information on the frequency band of the M-plane message. Afterwards, the DU may provide a SCS for a new frequency band to the RU by transmitting the frame structure through the C-plane message. Hereinafter, in FIG. 8 to FIG. 9, a method for providing the SCS for the new frequency band to the RU through the C-plane message without changing an M-plane will be described.

FIG. 8 illustrates an example of signaling between a DU and an RU for supporting a SCS through a C-plane message according to embodiments. The DU exemplifies the DU 210 of FIG. 2A. According to an embodiment, the DU 210 may comprise an O-DU 251. The RU exemplifies the RU 220 of FIG. 2A. According to an embodiment, the RU 220 may comprise an O-RU 253.

In an operation S801, the RU 220 may receive a control plane message (hereinafter, a C-plane message) from the DU 210. The RU 220 may receive the C-plane message from the DU 210.

In partial embodiments, the RU 220 may obtain section information of the C-plane message. The section information of the C-plane message may include a frame structure according to embodiments. According to an embodiment, a section type of the C-plane message may be '0'. According to another embodiment, the section type of the C-plane message may be '3'. The section information including the frame structure may be referred to the description for FIG. 5A.

In partial embodiments, the RU 220 may obtain section extension information of the C-plane message. The section extension information of the C-plane message may include the frame structure according to embodiments. According to an embodiment, a type (i.e., ExtType) of the section extension information may be '15'. At this time, a section type of the section information coupled to the section extension information may be '5' or '6'. The section extension information including the frame structure may be referred to the description for FIG. 5B.

In an operation S803, the RU 220 may identify a frequency band. In accordance with the frequency band of an operating frequency in the RU, whether a SCS corresponding to a value of the numerology information is supported varies. Therefore, in case that the value of the numerology information is greater than or equal to a reference value, there may be a case that the frequency band does not support the SCS corresponding to the value of the numerology information.

In case that the value of the numerology information is less than a reference value (e.g., '5' of the Table 4, the Table 5, and the Table 6), the RU may identify the SCS value corresponding to the numerology information. At this time, the RU may identify the SCS value corresponding to the numerology information based on an arbitrary mapping table (e.g., the Table 4, the Table 5, and the Table 6) among a stored mapping table. However, in case that the value of the numerology information is greater than or equal to the reference value, the RU may identify whether a SCS of 480 kHz and a SCS of 960 kHz are available in the frequency band. That is, the frequency band may be used to indicate whether the SCS of 480 kHz and the SCS of 960 kHz are available.

In an operation S805, the RU 220 may identify the SCS value. The RU 220 may identify whether the SCS of 480 kHz and the SCS of 960 kHz are available based on the frequency band. In case that the SCS of 480 kHz and the SCS of 960 kHz are available, the RU 220 may identify the SCS value corresponding to the numerology information based on a mapping table (e.g., the Table 5, and the Table 6) defining the SCS of 480 kHz and the SCS of 960 kHz. In case that the SCS of 480 kHz and the SCS of 960 kHz are not available, the RU 220 may use a preset SCS value or a default SCS. Herein, the preset SCS value means a value set through an M-plane. The default SCS means a value predefined in a frequency range of the frequency band.

As described above, in FIG. 8, a SCS of an additional frequency band (or a frequency band of an additional frequency range) may be supported without negotiation in the M-plane by changing only a frame structure IE of a section type 3 (or a section type 0) or a section extension type 15 without changing the M-plane. An RU capable of supporting the additional frequency band may recognize the value of the numerology information indicating the SCS that may be supported only in the additional frequency band. However, the RU not capable of supporting the additional frequency band may not recognize the value of the numerology information indicating the SCS that may be supported only in the additional frequency band. Accordingly, the RU may discard or ignore the received numerology information. Afterwards, the RU may transmit or receive a signal on a wireless access network through an SCS value corresponding to previously set numerology or the default SCS value.

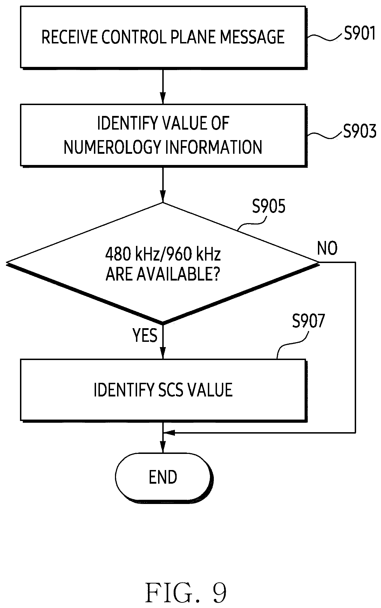

FIG. 9 illustrates an operation flow of an RU for supporting a SCS through a C-plane message according to embodiments. The RU exemplifies the RU 220 of FIG. 2A. According to an embodiment, the RU 220 may comprise an O-RU 253.

Referring to FIG. 9, in an operation S901, the RU may receive a control plane message (hereinafter, C-plane message). The C-plane message may include information for indicating a SCS value. The information for indicating the SCS value may be referred to as numerology information. The RU may obtain bits corresponding to the numerology information based on the C-plane message.

According to an embodiment, section information of the C-plane message may include a frame structure. For example, a section type of the C-plane message may be '0' (a section type for indicating idle or guard periods from a DU to the RU) or '3' (a section type for PRACH and mixed-numerology channels). The frame structure of the section information may be used to indicate an FFT/iFFT size and a SCS. For example, an LSB 4-bit of the frame structure may indicate the SCS.

According to another embodiment, section extension information of the C-plane message may include the frame structure. A type of the section extension information may be '15' (a section extension type for UE ID-based beamforming). The section type of the C-plane message may be '5' (a section type for UE scheduling information) or '6' (a section type for transmitting channel information for specific UE ID). The section extension information may be used to indicate the frame structure, the FFT/iFFT size and the SCS. For example, the LSB 4-bit of the frame structure may indicate the SCS.

In an operation S903, the RU may identify a value of the numerology information. For example, the RU may identify a value indicated by 4-bit of the numerology information. The value of the numerology information may be greater than or equal to a reference value (e.g., '5' of the Table 4, the Table 5, and the Table 6). In accordance with a frequency band of an operating frequency in the RU, whether or not a SCS corresponding to a value of the numerology information is supported varies. Therefore, in case that the value of the numerology information is greater than or equal to a reference value, there may be a case that the frequency band does not support the SCS corresponding to the value of the numerology information. In order to prevent this, an operation S905 may be performed.

In the operation S905, the RU may identify whether an SCS of 480 kHz and an SCS of 960 kHz are available. The RU may identify whether the frequency band may support the SCS of 480 kHz and the SCS of 960 kHz. In case that the SCS of 480 kHz and the SCS of 960 kHz are available, the RU may perform an operation S907. For example, the frequency band, which is a frequency band of an additional frequency range, may be a high frequency band compared to a predefined frequency band. As an example, the additional frequency range may correspond to a FR 2-2 of a 3GPP NR. The FR 2-2 of the 3GPP NR supports the SCS of 480 kHz and the SCS of 960 kHz. Meanwhile, in case that the SCS of 480 kHz and the SCS of 960 kHz are not available, the RU may terminate an operation. The RU may use a preset SCS value or a default SCS. Herein, the preset SCS value means a value set through an M-plane. The default SCS means a value predefined in accordance with a frequency range of the frequency band.

In the operation S907, the RU may identify a SCS value. The RU may identify an SCS value corresponding to the value of the numerology information. For example, the RU may identify the SCS value corresponding to the value of the numerology information based on the mapping table of the Table 4.

In FIG. 8 to FIG. 9, unlike FIG. 6 to FIG. 7, a method for providing an additional SCS through the C-plane message without changing the M-plane is described. An RU that supports an additionally defined frequency band (e.g., in the FR 2-2 of the 3GPP NR), or an additional frequency range (e.g., the FR 2-2, a FR 2-3 (e.g., 71 GHz to 100 GHz), or a FR 3 (e.g., greater than 100 GHz)) may identify a SCS from the bits (e.g., LSB 4-bit of a frame structure) of the C-plane message of the DU. However, an RU that do not support the additionally defined frequency band may identify that a value corresponding to the bits corresponds to 'reserved', may ignore the C-plane message, or may use a SCS according to a specified rule.

In FIG. 9, after identifying the value of the numerology information, it is illustrated that whether the SCS of 480 kHz and the SCS of 960 kHz are available, that is the operation S905 is always performed. However, in case that the value of the numerology information is less than the designated reference value (e.g., '5' in Table 4, Table 5, and Table 6), it may also be understood as an embodiment of the present disclosure that the operation S905 is not performed. This is because the value of the numerology information less than the designated reference value provides the same SCS regardless of the mapping table in accordance with backward compatibility.

When a SCS changes in an OFDM system, a length of a symbol period changes. In accordance with a NR standard, a slot may include 14 symbols. Therefore, when the SCS changes, a length of the slot also changes. Herein, for a SCS of 15 kHz or less, the symbol period may be determined based on 15 kHz. Common header information of the C-plane message may include 'startSymbolId'. The 'startSymbolId' means a symbol number in a slot of the earliest symbol to which information of the C-plane message is applicable. Common header information of a U-plane message may include the 'startSymbolId' and 'slotId'. The 'startSymbolId' means a symbol number in a slot of the earliest symbol to which information of the U-plane message is applicable. The 'slotId' means a slot number in a 1ms subframe. The 'startSymbolId' and the 'slotId', which are the above-described parameters, may be determined based on the SCS. For example, the same locations in a time domain may have the same frame number (e.g., frameId) and the same subframe number (e.g., subframeId). However, the locations in the time domain may correspond to slot numbers (e.g., 'slotId') different from each other and symbol numbers (e.g., 'startSymbolId') different from each other in accordance with the SCS.

As numerology increases, the maximum number (Nslot) of slots that may be included in the 1 ms subframe may be 64. For example, a slotId' field may be configured with 6-bit. The slotId' field of the C-plane message or the U-plane message has a value range from '00 0000b' to '11 1111b'. The 'slotId' field may include a bit string indicating a value from 0 to 63. Without reserved information, each value of all values in the 'slotId' field may be used to indicate one among possible slot numbers.

The highest possible numerology (i.e., the largest SCS) supported by the RU for a given frequency range (e.g., a FR 1, a FR 2-1, or the FR 2-2) may be used as a common reference per component carrier for a start of a slot identified by the 'slotId'. A UL and a DL of the same component carrier are required to use the same reference numerology for slotId. The symbol period and a time location may be calculated based on a µ value (a SCS of frameStruture of a message field or a SCS configured through the M-plane) and the slotId field of the C-plane message or U-plane message. Therefore, according to an embodiment slot indexing using mixed numerologies in a frequency band of the FR 2-2 may be performed based on the SCS of 960 kHz.

According to embodiments, a method performed by a radio unit (RU) may comprise receiving, from a distributed unit (DU) through a fronthaul interface, a control plane (C-plane) message including frame structure information. The frame structure information may include information indicating a size of fast fourier transform (FFT) or inverse FFT (iFFT), and numerology information. The method may comprise identifying a subcarrier spacing (SCS) based on the numerology information. In case that the numerology information may be a designated value, the SCS is 480 kilohertz (kHz). In case that the numerology information may be another designated value, the SCS is 960 kHz.

According to an embodiment, the method may further comprise receiving, from the DU through the fronthaul interface, a management plane (M-plane) message including information related to a frequency band. The information related to the frequency band may be used to identify a type among types for a SCS set being available. The types for the SCS set may include a first type including 480 kHz and 960 kHz and a second type not including 480 kHz and 960 kHz.

According to an embodiment, the identified SCS may correspond to a value of the numerology information based on a table in accordance with the identified type.

According to an embodiment, the identifying of the SCS may comprise identifying a frequency band, in case that the numerology information has the designated value or the other designated value. The identifying of the SCS may comprise identifying whether the frequency band supports 480 kHz and 960 kHz. The identifying of the SCS may comprise, in case that the frequency band supports 480 kHz and 960 kHz, identifying the SCS corresponding to the numerology information based on a table including 480 kHz and 960 kHz. The identifying of the SCS may comprise, in case that the frequency band does not support 480 kHz and 960 kHz, identifying the SCS as a setting value. The setting value may be a SCS value set prior to receiving the C-plane message, or a SCS value defined as a default value.

According to an embodiment, a section type of the C-plane message may be a section type 3 used for PRACH and mixed numerology channels, and the frame structure information may be included in section information of the C-plane message. Alternatively, a section type of the C-plane message may be a section type 5 for user equipment (UE) scheduling information or section a type 6 for transmitting UE channel information, and the frame structure information may be included in section extension information of the C-plane message.

According to embodiments, a method performed by a distributed unit (DU) may comprise generating frame structure information including information indicating a size of fast fourier transform (FFT) or inverse FFT (iFFT), and numerology information indicating a subcarrier spacing (SCS). The method may comprise transmitting, to a radio unit (RU) through a fronthaul interface, a control plane (C-plane) message including the frame structure information. In case that the numerology information is a designated value, the SCS may be 480 kilohertz (kHz). In case that the numerology information is another designated value, the SCS may be 960 kHz.

According to an embodiment, the method may further comprise transmitting, to the RU through the fronthaul interface, a management plane (M-plane) message including information related to a frequency band. The information related to the frequency band may be related to a type among types for a SCS set being available. The types for the SCS set may include a first type including 480 kHz and 960 kHz and a second type not including 480 kHz and 960 kHz.

According to an embodiment, the SCS may correspond to a value of the numerology information based on a table in accordance with the type.

According to an embodiment, the numerology information may have the designated value or the other designated value. A SCS in the RU may correspond to the numerology information in case that a frequency band of an operating frequency in the RU supports a SCS being 480 kHz and a SCS being 960 kHz. The SCS in the RU may correspond to a setting value in case that the frequency band of an operating frequency in the RU supports a SCS being 480 kHz and a SCS being 960 kHz. The setting value may be a SCS value set prior to receiving the C-plane message, or a SCS value defined as a default value.

According to an embodiment, a section type of the C-plane message may be a section type 3 used for PRACH and mixed numerology channels, and the frame structure information is included in section information of the C-plane message. Alternatively, a section type of the C-plane message may be a section type 5 for user equipment (UE) scheduling information or a section type 6 for transmitting UE channel information, and the frame structure information is included in section extension information of the C-plane message.

According to embodiments, an electronic device of a radio unit (RU) may comprise at least one transceiver and at least one processor coupled to the at least one transceiver. The at least one processor may be configured to control the at least one transceiver to receive, from a distributed unit (DU) through a fronthaul interface, a control plane (C-plane) message including frame structure information. The frame structure information may include information indicating a size of fast fourier transform (FFT) or inverse FFT (iFFT) and numerology information. The at least one processor may be configured to identify a subcarrier spacing (SCS) based on the numerology information. In case that the numerology information may be a designated value, the SCS is 480 kilohertz (kHz). In case that the numerology information may be another designated value, the SCS is 960 kHz.

According to an embodiment, the at least one processor may be additionally configured to control the at least one transceiver to receive, from the DU through the fronthaul interface, a management plane (M-plane) message including information related to a frequency band. The information related to the frequency band may be used to identify a type among types for a SCS set being available. The types for the SCS set may include a first type including 480 kHz and 960 kHz and a second type not including 480 kHz and 960 kHz.

According to an embodiment, the identified SCS may correspond to a value of the numerology information based on a table in accordance with the identified type.

According to an embodiment, in order to identify the SCS, the at least one processor may be configured to identify a frequency band, in case that the numerology information has the designated value or the other designated value. In order to identify the SCS, the at least one processor may be configured to identify whether the frequency band supports 480 kHz and 960 kHz. In order to identify the SCS, the at least one processor may be configured to, in case that the frequency band supports 480 kHz and 960 kHz, identify the SCS corresponding to the numerology information based on a table including 480 kHz and 960 kHz. In order to identify the SCS, the at least one processor may be configured to, in case that the frequency band does not support 480 kHz and 960 kHz, identify the SCS as a setting value. The setting value may be a SCS value set prior to receiving the C-plane message, or a SCS value defined as a default value.

According to an embodiment, a section type of the C-plane message may be a section type 3 used for PRACH and mixed numerology channels, and the frame structure information may be included in section information of the C-plane message. Alternatively, a section type of the C-plane message may be a section type 5 for user equipment (UE) scheduling information or section a type 6 for transmitting UE channel information, and the frame structure information may be included in section extension information of the C-plane message.

According to embodiments, an electronic device of a distributed unit (DU) may comprise at least one transceiver, and at least one processor coupled to the at least one transceiver. The at least one processor may be configured to generate frame structure information including information indicating a size of fast fourier transform (FFT) or inverse FFT (iFFT) and numerology information indicating a subcarrier spacing (SCS). The at least one processor may be configured to control the at least one transceiver to transmit, to a radio unit (RU) through a fronthaul interface, a control plane (C-plane) message including the frame structure information. In case that the numerology information may be a designated value, the SCS is 480 kilohertz (kHz). In case that the numerology information may be another designated value, the SCS is 960 kHz.

According to an embodiment, the at least one processor may be configured to transmit, to the RU through the fronthaul interface, a management plane (M-plane) message including information related to a frequency band. The information related to the frequency band may be related to a type among types for a SCS set being available. The types for the SCS set may include a first type including 480 kHz and 960 kHz and a second type not including 480 kHz and 960 kHz.

According to an embodiment, the SCS may correspond to a value of the numerology information based on a table in accordance with the type. According to an embodiment, the numerology information may have the designated value or the other designated value. A SCS in the RU may correspond to the numerology information in case that a frequency band of an operating frequency in the RU supports a SCS being 480 kHz and a SCS being 960 kHz. The SCS in the RU may correspond to a setting value in case that the frequency band of an operating frequency in the RU supports a SCS being 480 kHz and a SCS being 960 kHz. The setting value may be a SCS value set prior to receiving the C-plane message, or a SCS value defined as a default value.

According to an embodiment, a section type of the C-plane message may be a section type 3 used for PRACH and mixed numerology channels, and the frame structure information is included in section information of the C-plane message. Alternatively, a section type of the C-plane message may be a section type 5 for user equipment (UE) scheduling information or a section type 6 for transmitting UE channel information, and the frame structure information is included in section extension information of the C-plane message.

Methods according to embodiments described in claims or specifications of the present disclosure may be implemented as a form of hardware, software, or a combination of hardware and software.

In case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure.

Such a program (software module, software) may be stored in a random access memory, a non-volatile memory including a flash memory, a read only memory (ROM), an electrically erasable programmable read only memory (EEPROM), a magnetic disc storage device, a compact disc-ROM (CD-ROM), an optical storage device (digital versatile discs (DVDs) or other formats), or a magnetic cassette. Alternatively, it may be stored in memory configured with a combination of some or all of them. In addition, a plurality of configuration memories may be included.

Additionally, a program may be stored in an attachable storage device capable of being accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural components, and even components expressed in the plural may be configured in the singular, or a component expressed in the singular may be configured in the plural.

Meanwhile, specific embodiments have been described in the detailed description of the present disclosure, and of course, various modifications are possible without departing from the scope of the present disclosure.

## Claims

1. A method performed by a radio unit (RU), the method comprising:
receiving, from a distributed unit (DU) through a fronthaul interface, a control plane (C-plane) message including frame structure information, wherein the frame structure information includes information indicating a size of fast fourier transform (FFT) or inverse FFT (iFFT), and numerology information; and
identifying a subcarrier spacing (SCS) based on the numerology information, and
wherein:
in case that the numerology information is a designated value, the SCS is 480 kilohertz (kHz), and
in case that the numerology information is another designated value, the SCS is 960 kHz.

2. The method of claim 1, further comprising:
receiving, from the DU through the fronthaul interface, a management plane (M-plane) message including information related to a frequency band,
wherein the information related to the frequency band is used to identify a type among types for a SCS set being available, and
wherein the types for the SCS set include a first type including 480 kHz and 960 kHz and a second type not including 480 kHz and 960 kHz.

3. The method of claim 2,
wherein the identified SCS corresponds to a value of the numerology information based on a table in accordance with the identified type.

4. The method of claim 1, wherein the identifying of the SCS comprises:
identifying a frequency band, in case that the numerology information has the designated value or the another designated value,
identifying whether the frequency band supports 480 kHz and 960 kHz;
in case that the frequency band supports 480 kHz and 960 kHz, identifying the SCS corresponding to the numerology information based on a table including 480 kHz and 960 kHz; and
in case that the frequency band does not support 480 kHz and 960 kHz, identifying the SCS as a setting value, and
wherein the setting value is a SCS value set prior to receiving the C-plane message, or a SCS value defined as a default value.

5. The method of claim 1,
wherein a section type of the C-plane message is a section type 3 used for PRACH and mixed numerology channels, and the frame structure information is included in section information of the C-plane message, or
wherein a section type of the C-plane message is a section type 5 for user equipment (UE) scheduling information or section a type 6 for transmitting UE channel information, and the frame structure information is included in section extension information of the C-plane message.

6. A method performed by a distributed unit (DU), the method comprising:
generating frame structure information including information indicating a size of fast fourier transform (FFT) or inverse FFT (iFFT), and numerology information indicating a subcarrier spacing (SCS); and
transmitting, to a radio unit (RU) through a fronthaul interface, a control plane (C-plane) message including the frame structure information, and
wherein:
in case that the numerology information is a designated value, the SCS is 480 kilohertz (kHz), and
in case that the numerology information is another designated value, the SCS is 960 kHz.

7. The method of claim 6, further comprising:
transmitting, to the RU through the fronthaul interface, a management plane (M-plane) message including information related to a frequency band,
wherein the information related to the frequency band is related to a type among types for a SCS set being available, and
wherein the types for the SCS set include a first type including 480 kHz and 960 kHz and a second type not including 480 kHz and 960 kHz.

8. The method of claim 7,
wherein the SCS corresponds to a value of the numerology information based on a table in accordance with the type.

9. The method of claim 6,
wherein the numerology information has the designated value or the another designated value,
wherein a SCS in the RU corresponds to the numerology information in case that a frequency band of an operating frequency in the RU supports a SCS being 480 kHz and a SCS being 960 kHz,
wherein the SCS in the RU corresponds to a setting value in case that the frequency band of an operating frequency in the RU supports a SCS being 480 kHz and a SCS being 960 kHz, and
wherein the setting value is a SCS value set prior to receiving the C-plane message, or a SCS value defined as a default value.

10. The method of claim 6,
wherein a section type of the C-plane message is a section type 3 used for PRACH and mixed numerology channels, and the frame structure information is included in section information of the C-plane message, or
wherein a section type of the C-plane message is a section type 5 for user equipment (UE) scheduling information or a section type 6 for transmitting UE channel information, and the frame structure information is included in section extension information of the C-plane message.

11. An electronic device of a radio unit (RU), comprising:
at least one transceiver; and
at least one processor coupled to the at least one transceiver, and
wherein the at least one processor is configured to:
control the at least one transceiver to receive, from a distributed unit (DU) through a fronthaul interface, a control plane (C-plane) message including frame structure information, wherein the frame structure information includes information indicating a size of fast fourier transform (FFT) or inverse FFT (iFFT) and numerology information; and
identify a subcarrier spacing (SCS) based on the numerology information, and
wherein:
in case that the numerology information is a designated value, the SCS is 480 kilohertz (kHz), and
in case that the numerology information is another designated value, the SCS is 960 kHz.

12. The electronic device of claim 11, wherein the at least one processor is configured to perform one of methods of claims 2 to 5.

13. An electronic device of a distributed unit (DU), comprising:
at least one transceiver; and
at least one processor coupled to the at least one transceiver, and
wherein the at least one processor is configured to:
generate frame structure information including information indicating a size of fast fourier transform (FFT) or inverse FFT (iFFT) and numerology information indicating a subcarrier spacing (SCS); and
control the at least one transceiver to transmit, to a radio unit (RU) through a fronthaul interface, a control plane (C-plane) message including the frame structure information, and
wherein:
in case that the numerology information is a designated value, the SCS is 480 kilohertz (kHz), and
in case that the numerology information is another designated value, the SCS is 960 kHz.

14. The electronic device of claim 13, wherein the at least one processor is configured to perform one of methods of claims 7 to 10.
